# EUROPÄISCHE PATENTSCHRIFT

(11) **EP 2 121 411 B1**
(45) Veröffentlichungstag und Bekanntmachung des Hinweises auf die Patenterteilung: **31.05.2017**
(21) Anmeldenummer: 08715810.1
(22) Anmeldetag: 16.02.2008
(51) Int. Cl.: B62B 3/10, B62B 5/00

(54) **REINIGUNGSWAGEN**
CLEANING CART
CHARIOT DE NETTOYAGE

(30) Priorität: 19.02.2007 DE 102007008133
(43) Veröffentlichungstag der Anmeldung: 25.11.2009
(73) Patentinhaber: Alfred Kärcher GmbH & Co. KG, 71364 Winnenden (DE)
(72) Erfinder: TROFF, Gilles, 70437 Stuttgart (DE); HEINZELMANN, Martina, 70190 Stuttgart (DE)
(74) Vertreter: Hoeger, Stellrecht & Partner Patentanwälte mbB
(86) Internationale Anmeldenummer: PCT/EP2008/001209
(87) Internationale Veröffentlichungsnummer: WO 2008/101640

(56) Entgegenhaltungen:
- EP-A- 0 950 599
- EP-A- 1 118 525
- WO-A-2006/078947
- DE-B3-102005 044 984
- DE-U1- 8 619 303
- US-A- 2 555 178
- US-A1- 2006 157 946

## Beschreibung

Die Erfindung betrifft einen Reinigungswagen mit mindestens drei Laufrädern, einem Fahrgestell und auf dem Fahrgestell angeordneten Aufbauten, die insbesondere waagerechte und senkrechte Stütz- und Halteelemente aufweisen, beispielsweise zur Halterung von Behältern, wobei auf einer Seite der Aufbauten mindestens ein Führungshandgriff angeordnet ist und an der dem Führungshandgriff abgewandten Seite an den Aufbauten eine Halteeinrichtung vorgesehen ist.

Solche Reinigungswagen sind aus DE 10 2005 044 984 B3 bekannt. Sie werden in privaten Gebäuden, aber auch in Industriegebäuden sowie in Bürogebäuden eingesetzt, um große Bereiche zu reinigen. Die Reinigungswagen sind zur Halterung von Behältern geeignet. Es handelt sich dabei um Sammelbehälter für Müll, aber auch um Vorratsbehälter für Reinigungsmittel. Auch Einrichtungen zur Aufbewahrung von Reinigungsgeräten und kleineren Reinigungsmaschinen wie zum Beispiel Staubsauger können auf diesen Reinigungswagen vorgesehen sein.

Die Erfindung betrifft dabei insbesondere solche Reinigungswagen, die im gewerblichen Dienstleistungsbereich verwendet werden.

Bei der Reinigung größerer Büro- oder Industriegebäude mit verschiedenartigen Räumen wird es häufig gewünscht, dass das Reinigungspersonal die Räume nicht nur reinigt sondern auch eine Dokumentation über die durchgeführten Arbeiten führt. Auf diese Weise ist es beispielsweise möglich, Reinigungszyklen in einem vereinbarten Abstand durchzuführen, die Durchführung der Reinigungsarbeiten zu kontrollieren und die Reinigungsarbeiten auf die unterschiedlichen Anforderungen des Kunden abzustimmen.

Die Protokollierung der Reinigungsarbeiten erforderte bisher üblicherweise die schriftliche Aufzeichnung von Notizen. Es ist auch schon bekannt, zur Protokollierung von Reinigungsarbeiten Barcode-Lesegeräte zu verwenden, wobei dem Reinigungspersonal unterschiedliche Barcodes zur Auswahl stehen, die dann entsprechend der durchgeführten bzw. durchzuführenden Reinigungsarbeit mit einem Barcode-Lesegerät eingelesen werden. Die Barcodes sind dazu auf unterschiedliche Karten abgedruckt, die von der Reinigungskraft mitgeführt werden müssen.

Aus EP 1 118 525 A2 ist eine Transportvorrichtung bekannt, mit der eine Vielzahl von Gütern befördert werden können. Die Transportvorrichtung umfasst eine Bodenplatte. Im Bereich des äußeren Umfangs der Bodenplatte ist eine schräg nach oben zeigende Identifikationsfläche angeordnet, auf die ein Barcode aufgebracht ist. Um die Identifikationsfläche vor Beschädigungen zu schützen, insbesondere auch in gestapeltem Zustand, weist die Identifikationsfläche einen die Fläche einfassenden erhöhten Rand auf. Oberhalb der Identifikationsfläche ist eine Seitenwand der Transportvorrichtung angeordnet, die den auf der Identifikationsfläche aufgebrachten Barcode zusätzlich vor Beschädigungen schützt. Aus der DE 86 19 303 U1 ist ein Reinigungswagen bekannt mit einem Fahrgestell, auf dem ein aus mehreren Holmen gebildetes Gestell gehalten ist, dessen dem Fahrgestell abgewandter oberer Endabschnitt zur Vertikalen geneigt ist und einen Führungshandgriff ausbildet. An der dem Führungshandgriff abgewandten Seite des Gestells ist eine Moppresse lösbar gehalten. Auf einer ihrer Außenseiten zeigt die Moppresse ein in der DE 86 19 303 U1 nicht näher erläutertes Rechteck, in dem Symbole angeordnet sind.

Die Aufgabe und das Ziel der vorliegenden Erfindung besteht nun darin, das besonders einfache Lesen von mit einem elektronischen Lesegerät lesbaren Zeichen und/oder Informationsträgern an einem Reinigungswagen zu ermöglichen.

Erfindungsgemäß wird dazu ein Reinigungswagen mit den Merkmalen von Patentanspruch 1 vorgeschlagen.

Eine sehr bedienungsfreundliche Lösung besteht darin, dass auf der Fläche Barcodes zum Ablesen mit einem Barcodeleser aufgebracht sind.

Besonders vorteilhaft können die Barcodes dabei auf die Fläche aufgeklebt sein.

Die geschützte Anordnung hat dabei den Vorteil, dass die Reinigungskraft beim Schieben des Reinigungswagens die auf der Fläche angebrachten Barcodes mit dem Lesegerät ablesen kann, ohne dazu um den Wagen herumgehen zu müssen.

So kann besonders nach dem Reinigen eines Raumes, wenn die Reinigungsgeräte bereits wieder auf dem Reinigungswagen verstaut sind, die Reinigungskraft kurz vor dem Verlassen des Raumes oder bereits während des Führens des Reinigungswagens die Barcodes mit dem Lesegerät ablesen.

Wenn die Barcodes auf die Fläche aufgeklebt werden, so ist eine Erneuerung der Barcodes nach Verschmutzung oder Beschädigung und auch eine personenbezogene Anordnung von Barcodes möglich.

Eine zur Waagerechten geneigte und der Führungshandgriffseite zugewandte Fläche hat den Vorteil, dass die auf der Fläche angebrachten mit einem elektronischen Lesegerät lesbaren Zeichen und/oder Informationsträger besonders leicht von der den Reinigungswagen führenden Reinigungskraft mit einem elektronischen Lesegerät abgelesen werden können.

Eine derart angeordnete Fläche hat darüber hinaus den Vorteil, dass auf der Fläche Informationen angezeigt werden können, die ständig im Blickfeld der den Reinigungswagen führenden Reinigungskraft sind.

Besonders günstig ist es, wenn die Fläche gegenüber der Waagerechten um einen Winkel von 10° bis 60°, bevorzugt 20° bis 50° und optimal um einen Winkel von 35° geneigt ist.

Von Vorteil ist es, wenn die die Fläche aufweisende Halteeinrichtung lösbar befestigt ist. Dies gibt der Reinigungskraft die Möglichkeit, die Halteeinrichtung wahlweise an verschiedenen Reinigungswagen zu befestigen. Es ist dadurch möglich, der Reinigungskraft eine "persönliche" Halteeinrichtung zuzuteilen. Es ergeben sich bei einer derartigen Ausgestaltung auch herstellungstechnische Vorteile, weil eine Halteeinrichtung gefertigt werden kann, die bei unterschiedlichen Ausführungen von Reinigungswagen, zum Beispiel auch als Zubehörteil, verwendet werden kann.

Besonders günstig ist es, wenn die Halteeinrichtung eine oder mehrere Befestigungsglieder zur lösbaren Befestigung von einen Stiel aufweisenden Reinigungsgeräten oder -maschinen umfasst. Dadurch können auf einfache Weise unterschiedlichen Reinigungsarbeiten zugeordnete und individuell ausgewählte Reinigungsgeräte und -maschinen mitgeführt werden.

Insbesondere wenn akkubetriebene Reinigungsgeräte zum Einsatz kommen, ist es von Vorteil, wenn die Halteeinrichtung ein Fach zur Ablage eines Ersatzakkus für ein Reinigungsgerät aufweist.

Bevorzugt weist die Halteeinrichtung eine Aufnahme für einen Getränkebehälter, insbesondere eine Flasche oder einen Becher, auf.

Von besonderem Vorteil ist es, wenn die Halteeinrichtung einen oder mehrere Mülltütenspender aufweist.

Die Mülltütenspender umfassen bevorzugt ein durch eine Klappe verschlossenes Fach, wobei die Klappe einen Schlitz zum Hindurchführen von auf einer Rolle innerhalb des Faches angeordneten Müllbeuteln aufweist.

Günstigerweise ist an den Aufbauten eine Müllsackhalterung angeordnet.

Dabei ist es besonders vorteilhaft, wenn der Führungshandgriff auf der einen Seite der Müllsackhalterung und die Halteeinrichtung auf der anderen Seite der Müllsackhalterung angeordnet ist.

Es kann vorgesehen sein, dass der erfindungsgemäße Reinigungswagen senkrechte Stützwände aufweist, welche mit Einrastmitteln mit dem Fahrgestell und im Wesentlichen rechtwinklig miteinander verbunden sind.

Besonders vorteilhaft ist es, wenn auf der dem Führungshandgriff abgewandten Seite des Fahrgestells neben einem Halter für Mülltüten ein weiterer Behälter angeordnet ist.

Für eine einfache Bedienbarkeit ist es von Vorteil, wenn neben Barcodes schriftliche und/oder symbolartige Erläuterungen angebracht sind.

Von ganz besonderem Vorteil ist es, wenn die Halteeinrichtung eine Aufnahme für einen Barcodeleser aufweist. Der Barcodeleser kann bei Nichtgebrauch dort abgelegt werden.

Vorteilhafterweise kann vorgesehen sein, dass die Halteeinrichtung ein Ladegerät für den Akku eines Barcodelesers oder eines Akku-Reinigungsgerätes aufweist.

Bevorzugt können die Aufbauten eine Halterung für einen elektrischen Staubsauger umfassen.

Die nachfolgende Beschreibung einer bevorzugten Ausführungsform dient im Zusammenhang mit der Zeichnung der näheren Erläuterung.

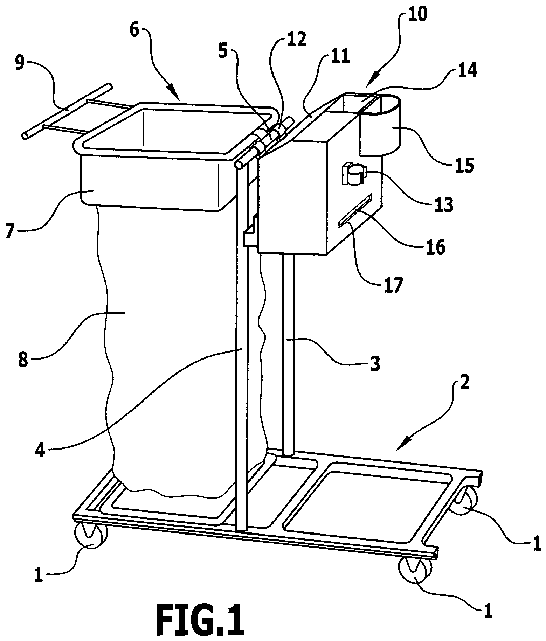

Figur 1 zeigt eine perspektivische Darstellung eines erfindungsgemäßen Reinigungswagens.

Der in Figur 1 schematisch dargestellte Reinigungswagen weist vier Laufräder 1 auf, die an einem Fahrgestell 2 gelagert sind. Auf dem Fahrgestell 2 sind Aufbauten angeordnet in Form von zwei senkrechten Stützelementen 3, 4 und einem waagerechten Halteelement 5. Am Halteelement 5 ist ein Behälter 6 lösbar gehalten. Der Behälter 6 umfasst eine Behälterhalterung in Form einer Mülltütenhalterung 7 und eine daran befestigte Mülltüte 8.

Selbstverständlich können bei anderen Ausführungsformen der Erfindung die senkrechten Stützelemente auch als durchgehende Wände ausgeführt sein.

Auf der einen Seite der Aufbauten 3, 4, 5 ist ein Führungshandgriff 9 angeordnet. An diesem Führungshandgriff 9 kann der Reinigungswagen geführt und zur Fortbewegung geschoben werden.

Auf der dem Führungshandgriff 9 abgewandten Seite ist an den Aufbauten 3, 4, 5 eine Halteeinrichtung 10 befestigt, welche in eine zu der Führungshandgriffseite des Reinigungswagens hin gewendete Fläche 11 aufweist. Die Fläche 11 ist gegenüber der Waagerechten um einen Winkel von beispielsweise 35° geneigt. Die Halteeinrichtung 10 kann mit den Aufbauten 3, 4, 5 verschraubt sein, sie kann jedoch auch mittels hakenartiger Befestigungsglieder 12 am waagerechten Halteelement 5 lösbar befestigt sein. An der Halteeinrichtung 10 ist ein Befestigungsglied 13 zur lösbaren Befestigung von einen Stiel aufweisenden Reinigungsgeräten oder- maschinen (hier nicht dargestellt) angebracht. Die Halteeinrichtung 10 weist außerdem ein Fach 14 zur Ablage eines Ersatzakkus für ein Reinigungsgerät (hier nicht dargestellt) auf. Zusätzlich ist an der Halteeinrichtung 10 eine Aufnahme 15 für einen Getränkebehälter, insbesondere eine Flasche oder einen Becher, befestigt. Die Halteeinrichtung 10 weist darüber hinaus einen Mülltütenspender 16 auf. Dieser besteht aus einem durch eine Klappe verschlossenen Fach, wobei die Klappe einen Schlitz 17 zum Hindurchführen von auf einer Rolle innerhalb des Faches angeordneten Müllbeuteln aufweist.

Die auf der Fläche 11 aufgedruckten Barcodes werden von der Person, die den Reinigungswagen verwendet, mit einem Barcode-Lesegerät abgelesen und gespeichert. Die Person kann hierbei eine Position hinter dem Führungshandgriff 9 einnehmen, so dass sie die Barcodes ablesen und speichern kann, während sie den Reinigungswagen schiebt. Die Fläche 11, an der die Barcodes angeordnet sind, ist aufgrund ihrer Neigung und Ausrichtung für die den Reinigungswagen schiebende Person gut zugänglich.

## Patentansprüche

1. Reinigungswagen mit mindestens drei Laufrädern (1), einem Fahrgestell (2) und auf dem Fahrgestell (2) angeordneten Aufbauten (3, 4, 5), wobei auf einer Seite der Aufbauten (3, 4, 5) mindestens ein Führungshandgriff (9) angeordnet ist und wobei an der dem Führungshandgriff (9) abgewandten Seite an den Aufbauten (3, 4, 5) eine Halteeinrichtung (10) vorgesehen ist, **dadurch gekennzeichnet, dass** die Halteeinrichtung eine Fläche (11) aufweist, auf der mit einem elektronischen Lesegerät lesbare Zeichen und/oder mit einem elektronischen Lesegerät lesbare Informationsträger angebracht sind, wobei die Fläche (11) zur Waagerechten geneigt und der Führungshandgriffseite des Reinigungswagens zugewandt ist.

2. Reinigungswagen nach Anspruch 1, **dadurch gekennzeichnet, dass** auf der Fläche (11) Barcodes zum Ablesen mit einem Barcodeleser aufgebracht sind.

3. Reinigungswagen nach Anspruch 2, **dadurch gekennzeichnet, dass** die Barcodes aufgeklebt sind.

4. Reinigungswagen nach einem der voranstehenden Ansprüche, **dadurch gekennzeichnet, dass** die Fläche (11) zur Waagerechten um einen Winkel von 10° bis 60° geneigt ist.

5. Reinigungswagen nach Anspruch 4, **dadurch gekennzeichnet, dass** die Fläche (11) zur Waagerechten um einen Winkel von 20° bis 50° geneigt ist.

6. Reinigungswagen nach Anspruch 5, **dadurch gekennzeichnet, dass** die Fläche (11) zur Waagerechten um einen Winkel von 35° geneigt ist.

7. Reinigungswagen nach einem der vorhergehenden Ansprüche, **dadurch gekennzeichnet, dass** die Halteeinrichtung (10) lösbar befestigt ist.

8. Reinigungswagen nach einem der vorhergehenden Ansprüche, **dadurch gekennzeichnet, dass** die Halteeinrichtung (10) eine oder mehrere Befestigungsglieder (13) zur lösbaren Befestigung von einen Stiel aufweisenden Reinigungsgeräten oder -maschinen umfasst.

9. Reinigungswagen nach einem der vorhergehenden Ansprüche, **dadurch gekennzeichnet, dass** die Halteeinrichtung (10) ein Fach (14) zur Ablage eines Ersatzakkus für ein Reinigungsgerät aufweist.

10. Reinigungswagen nach einem der vorhergehenden Ansprüche, **dadurch gekennzeichnet, dass** die Halteeinrichtung (10) eine Aufnahme (15) für einen Getränkebehälter aufweist.

11. Reinigungswagen nach einem der vorhergehenden Ansprüche, **dadurch gekennzeichnet, dass** die Halteeinrichtung (10) einen oder mehrere Mülltütenspender (16) aufweist.

12. Reinigungswagen nach Anspruch 11, **dadurch gekennzeichnet, dass** der mindestens eine Mülltütenspender (16) ein durch eine Klappe verschlossenes Fach umfasst, wobei die Klappe einen Schlitz (17) zum Hindurchführen von auf einer Rolle innerhalb des Faches angeordneten Müllbeuteln aufweist.

13. Reinigungswagen nach einem der vorhergehenden Ansprüche, **dadurch gekennzeichnet, dass** an den Aufbauten eine Müllsackhalterung (7) angeordnet ist.

14. Reinigungswagen nach Anspruch 13, **dadurch gekennzeichnet, dass** der Führungshandgriff (9) auf der einen Seite der Müllsackhalterung (7) und die Halteeinrichtung (10) auf der anderen Seite der Müllsackhalterung (7) angeordnet ist.

15. Reinigungswagen nach einem der vorhergehenden Ansprüche, **dadurch gekennzeichnet, dass** der Reinigungswagen senkrechte Stützwände aufweist, die mit Einrastmitteln mit dem Fahrgestell (2) und im Wesentlichen rechtwinklig miteinander verbunden sind.

16. Reinigungswagen nach einem der vorhergehenden Ansprüche, **dadurch gekennzeichnet, dass** auf der dem Führungshandgriff (9) abgewandten Seite des Fahrgestells (2) neben einem Halter (7) für Mülltüten ein weiterer Behälter angeordnet ist.

17. Reinigungswagen nach einem der vorhergehenden Ansprüche, **dadurch gekennzeichnet, dass** die Halteeinrichtung (10) eine Aufnahme für einen Barcodeleser aufweist.

18. Reinigungswagen nach einem der vorhergehenden Ansprüche, **dadurch gekennzeichnet, dass** die Halteeinrichtung (10) ein Ladegerät für den Akku eines Barcodelesers oder eines Akku-Reinigungsgerätes aufweist.

19. Reinigungswagen nach einem der vorhergehenden Ansprüche, **dadurch gekennzeichnet, dass** die Aufbauten (3, 4, 5) eine Halterung für einen elektrischen Staubsauger aufweisen.

## Claims

1. A cleaning trolley having at least three wheels (1), a wheel frame (2) and a superstructure (3, 4, 5) arranged on the wheel frame (2), wherein at least one guide handle (9) is arranged on one side of the superstructure (3, 4, 5) and wherein a holding device (10) is provided on the superstructure (3, 4, 5) at that side thereof remote from the guide handle (9), **characterised in that** the holding device has a surface (11) to which there is/are attached characters readable with an electronic reader and/or information carriers readable with an electronic reader, wherein the surface (11) is inclined to the horizontal and is facing the guide handle side of the cleaning trolley.

2. A cleaning trolley according to claim 1, **characterised in that** barcodes for reading with a barcode reader are applied on the surface (11).

3. A cleaning trolley according to Claim 2, **characterised in that** the bar codes are stuck on.

4. A cleaning trolley according to any one of the preceding claims, **characterised in that** the surface (11) is inclined to the horizontal by an angle from 10° to 60°.

5. A cleaning trolley according to claim 4, **characterised in that** the surface (11) is inclined to the horizontal by an angle from 20° to 50°.

6. A cleaning trolley according to claim 5, **characterised in that** the surface (11) is inclined to the horizontal by an angle of 35°.

7. A cleaning trolley according to any one of the preceding claims, **characterised in that** the holding device (10) is detachably secured.

8. A cleaning trolley according to any one of the preceding claims, **characterised in that** the holding device (10) comprises one or a plurality of securing members (13) for detachable securing of cleaning appliances or machines having a handle.

9. A cleaning trolley according to any one of the preceding claims, **characterised in that** the holding device (10) has a compartment (14) for storage of a spare rechargeable battery for a cleaning appliance.

10. A cleaning trolley according to any one of the preceding claims, **characterised in that** the holding device (10) has a receiver (15) for a beverage container.

11. A cleaning trolley according to any one of the preceding claims, **characterised in that** the holding device (10) has one or a plurality of refuse bag dispensers (16).

12. A cleaning trolley according to claim 11, **characterised in that** the at least one refuse bag dispenser (16) comprises a compartment closed by a flap, wherein the flap has a slot (17) for the through passage of refuse bags arranged on a roller within the compartment.

13. A cleaning trolley according to any one of the preceding claims, **characterised in that** a refuse sack holding means (7) is arranged on the superstructure.

14. A cleaning trolley according to claim 13, **characterised in that** the guide handle (9) is arranged on one side of the refuse sack holding means (7) and the holding device (10) is arranged on the other side of the refuse sack holding means (7).

15. A cleaning trolley according to any one of the preceding claims, **characterised in that** the cleaning trolley has vertical support walls which are connected to the wheel frame (2) by means of engagement means and connected to one another substantially at right angles.

16. A cleaning trolley according to any one of the preceding claims, **characterised in that** on that side of the wheel frame (2) remote from the guide handle (9), another container is arranged alongside a holder (7) for refuse bags.

17. A cleaning trolley according to any one of the preceding claims, **characterised in that** the holding device (10) has a receiver for a bar code reader.

18. A cleaning trolley according to any one of the preceding claims, **characterised in that** the holding device (10) has a charger for the rechargeable battery of a bar code reader or of a rechargeable-battery-powered cleaning appliance.

19. A cleaning trolley according to any one of the preceding claims, **characterised in that** the superstructure (3, 4, 5) has a holding means for an electric vacuum cleaner.

## Revendications

1. Chariot de nettoyage comprenant au moins trois roues mobiles (1), un châssis (2) et des éléments de structure (3, 4, 5) agencés sur le châssis (2), au moins une poignée de guidage (9) étant agencée sur une face des éléments de structure (3, 4, 5) et un dispositif de retenue (10) étant prévu sur les éléments de structure (3, 4, 5) sur la face opposée à la poignée de guidage (9), **caractérisé en ce que** le dispositif de retenue présente une surface (11), sur laquelle sont appliqués des signes lisibles par un appareil de lecture électronique et/ou des supports d'informations lisibles par un appareil de lecture électronique, la surface (11) étant inclinée par rapport à l'horizontale et tournée vers la face de poignée de guidage du chariot de nettoyage.

2. Chariot de nettoyage selon la revendication 1, **caractérisé en ce que** des codes à barres destinés à être lus par un lecteur de codes à barres sont appliqués sur la surface (11).

3. Chariot de nettoyage selon la revendication 2, **caractérisé en ce que** les codes à barres sont collés.

4. Chariot de nettoyage selon l'une quelconque des revendications précédentes, **caractérisé en ce que** la surface (11) est inclinée par rapport à l'horizontale d'un angle de 10° à 60°.

5. Chariot de nettoyage selon la revendication 4, **caractérisé en ce que** la surface (11) est inclinée par rapport à l'horizontale d'un angle de 20° à 50°.

6. Chariot de nettoyage selon la revendication 5, **caractérisé en ce que** la surface (11) est inclinée par rapport à l'horizontale d'un angle de 35°.

7. Chariot de nettoyage selon l'une quelconque des revendications précédentes, **caractérisé en ce que** le dispositif de retenue (10) est fixé de manière détachable.

8. Chariot de nettoyage selon l'une quelconque des revendications précédentes, **caractérisé en ce que** le dispositif de retenue (10) comprend un ou plusieurs organes de fixation (13) permettant la fixation détachable d'appareils ou de machines de nettoyage comprenant un manche.

9. Chariot de nettoyage selon l'une quelconque des revendications précédentes, **caractérisé en ce que** le dispositif de retenue (10) comprend un compartiment (14) permettant le dépôt d'un accumulateur de remplacement pour un appareil de nettoyage.

10. Chariot de nettoyage selon l'une quelconque des revendications précédentes, **caractérisé en ce que** le dispositif de retenue (10) comprend un logement (15) pour un récipient à boissons.

11. Chariot de nettoyage selon l'une quelconque des revendications précédentes, **caractérisé en ce que** le dispositif de retenue (10) comprend un ou plusieurs distributeurs de sacs-poubelle (16).

12. Chariot de nettoyage selon la revendication 11, **caractérisé en ce que** le ou les distributeurs de sacs-poubelle (16) comprennent un compartiment fermé par un clapet, le clapet présentant une fente (17) par laquelle passent les sacs-poubelle agencés sur un rouleau à l'intérieur du compartiment.

13. Chariot de nettoyage selon l'une quelconque des revendications précédentes, **caractérisé en ce qu'**un élément de retenue de sac-poubelle (7) est agencé sur les éléments de structure.

14. Chariot de nettoyage selon la revendication 13, **caractérisé en ce que** la poignée de guidage (9) est agencée sur l'une des faces de l'élément de retenue de sacs-poubelle (7) et le dispositif de retenue (10) est agencé sur l'autre face de l'élément de retenue de sacs-poubelle (7).

15. Chariot de nettoyage selon l'une quelconque des revendications précédentes, **caractérisé en ce que** le chariot de nettoyage comprend des parois d'appui verticales, qui sont reliées par des moyens d'encliquetage au châssis (2) et les uns aux autres sensiblement à angle droit.

16. Chariot de nettoyage selon l'une quelconque des revendications précédentes, **caractérisé en ce qu'**un autre récipient est agencé sur la face du châssis (2) opposée à la poignée de guidage (9), en plus d'un support (7) pour les sacs-poubelle.

17. Chariot de nettoyage selon l'une quelconque des revendications précédentes, **caractérisé en ce que** le dispositif de retenue (10) comprend un logement pour un lecteur de codes à barres.

18. Chariot de nettoyage selon l'une quelconque des revendications précédentes, **caractérisé en ce que** le dispositif de retenue (10) comprend un appareil de charge pour l'accumulateur d'un lecteur de codes à barres ou d'un appareil de nettoyage d'accumulateur.

19. Chariot de nettoyage selon l'une quelconque des revendications précédentes, **caractérisé en ce que** les éléments de structure (3, 4, 5) comprennent un élément de retenue pour un aspirateur électrique.
